# FASCICULE DE BREVET EUROPEEN

(11) **EP 2 790 860 B1**
(45) Date de publication et mention de la délivrance du brevet: **21.03.2018**
(21) Numéro de dépôt: 12815828.4
(22) Date de dépôt: 11.12.2012
(51) Int. Cl.: B23B 47/34, B23B 41/06, B23B 41/16, B23B 51/00, B23B 47/00, B23Q 5/32, B23Q 5/40

(54) **PROCEDE D'USINAGE**
BEARBEITUNGSVERFAHREN
MACHINING PROCESS

(30) Priorité: 16.12.2011 FR 1161857; 19.12.2011 US 201161577143 P
(43) Date de publication de la demande: 22.10.2014
(73) Titulaire: Mitis, 44340 Bouguenais (FR)
(72) Inventeur: LAPORTE, Sylvain, F-44300 Nantes (FR)
(74) Mandataire: Nony
(86) Numéro de dépôt international: PCT/IB2012/057185
(87) Numéro de publication internationale: WO 2013/088343

(56) Documents cités:
- FR-A- 914 700
- FR-A1- 2 902 848
- FR-A1- 2 944 722
- JP-A- 2003 094 276
- US-A1- 2006 099 039

## Description

La présente invention concerne les procédés et dispositifs d'usinage.

D'une façon générale, l'usinage vise à créer une forme par enlèvement de matière à l'aide d'un outil de coupe entraîné en rotation et déplacé relativement à la matière à usiner en fonction de la forme à réaliser.

Par usinage axial, il y a deux manières de créer la forme recherchée, à savoir par usinage de forme et par usinage d'enveloppe.

Dans le premier cas, c'est la forme de l'outil de coupe qui conditionne la forme de la surface obtenue. Cette dernière présente ainsi une génératrice non parallèle à l'axe de rotation.

Dans le deuxième cas, c'est l'enveloppe du volume balayé par l'outil de coupe qui détermine la forme de la surface usinée.

Les fraisurages, lamages, alésages coniques et surfaçages sont des exemples d'usinage axial de forme. Un perçage traversant est un exemple d'usinage axial d'enveloppe.

Dans l'aéronautique notamment, certains usinages axiaux doivent êtres réalisés avec précision. Les usinages concernés sont par exemple :
- les fraisures, destinées à accueillir les têtes des éléments de fixation, qui ne doivent pas faire saillie ou se retrouver en dépression sous peine de créer des perturbations aérodynamiques (désaffleurement) ;
- les alésages coniques, destinés à recevoir des éléments d'assemblage par friction cône/cône, pour lesquels la portée surfacique entre les deux éléments doit être correctement assurée ;
- les lamages et surfaçages, destinés à créer des surfaces d'appui planes pour des éléments d'assemblage tels qu'écrous, têtes de rivets ou têtes de vis et pour lesquels la qualité de l'appui est essentielle à la tenue dans le temps de l'assemblage.

Dans ces exemples non limitatifs, l'usinage effectué doit donc garantir le respect dimensionnel et géométrique des formes réalisées.

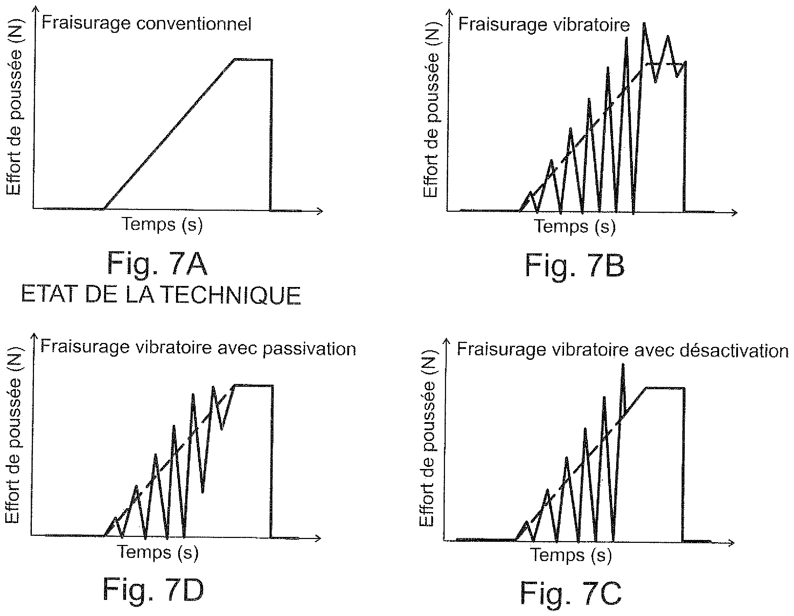

La figure 7A illustre l'évolution du profil d'effort dans le temps pour un fraisurage conventionnel. L'augmentation de l'effort est due au fait que plus la fraisure (cône) est profonde, plus la matière à enlever est importante pour un même déplacement axial. La fin de l'opération voit l'effort rester constant (ou presque) car l'outil arrête d'avancer pour effectuer un glaçage de la surface (lissage), puis l'outil est dégagé et l'effort cesse.

Des dispositifs de perçage vibratoire sont divulgués dans les publications WO 2008/000935 A1, DE 10 2005 002 462 B4, US 7 510 024 B2, FR 2 907 695, US 2007/209813 et FR 2 952 563.

Le perçage vibratoire s'est développé car il présente notamment l'avantage de faciliter l'évacuation des copeaux.

On voit sur la figure 7B qui représente l'évolution du profil d'effort dans l'exemple d'un fraisurage qu'à l'effort initial vient se superposer la composante vibratoire, qui intervient même sur la phase de glaçage.

Jusqu'à présent, l'utilisation du perçage vibratoire est restée cantonnée à l'usinage axial d'enveloppe, notamment pour réaliser des trous. En effet, dans le cas de l'usinage axial de forme, les oscillations axiales génèrent sur la surface usinée, des ondulations qui ne permettent pas toujours de garantir les tolérances dimensionnelles et géométriques demandées.

Il existe un besoin pour perfectionner encore les dispositifs d'usinage assisté par vibrations, notamment dans le but de pouvoir réaliser un usinage de forme tout en disposant d'une surface répondant aux exigences dimensionnelles et géométriques recherchées, au terme de l'opération.

L'invention a ainsi pour objet un procédé d'usinage qui fait intervenir au moins un usinage de forme, notamment un usinage axial de forme, comportant les caractéristiques de la revendication 1, à savoir avec:
a) la réalisation d'un usinage, notamment axial, sur une première distance à l'aide d'un outil de coupe soumis lors de son avance à des oscillations axiales, puis
b) la diminution de l'amplitude des oscillations axiales, cette diminution étant de préférence une annulation, tout en continuant d'entraîner l'outil de coupe en rotation. L'étape b) permet de réaliser un usinage de forme précis.

L'étape b) peut être suivie d'une étape c) de dégagement de l'outil de coupe.

Le procédé selon l'invention permet de réaliser un usinage de forme sans les inconvénients liés à la présence des ondulations au terme du mouvement d'avance de l'outil de coupe.

Ce procédé peut être mis en oeuvre sur des installations d'usinage variées, et notamment non limitées à des dispositifs d'usinage axial assisté par vibrations, comportant une source vibratoire telle que divulguée dans FR 2 952 563.

L'invention permet de retrouver au cours de l'usinage des conditions de travail garantes de la position de l'outil, ce qui est primordial dans les opérations d'usinage de forme où des formes non cylindriques sont désirées, telles que le fraisurage, l'alésage conique, le lamage et le surfaçage.

Grâce à l'invention, le mouvement vibratoire se trouve désactivé ou passivé par exemple sur les derniers tours de l'outil lors du cycle d'usinage, et les tolérances dimensionnelles et de forme en fin de cycle sont plus aisément respectées.

L'amplitude des oscillations axiales peut être réduite de diverses façons. L'amplitude des oscillations peut être ramenée à zéro ou être diminuée sans être complément annulée. Dans ce cas, l'amplitude est suffisamment diminuée pour obtenir l'état de surface convenant à l'application pour laquelle l'usinage est réalisé.

Pour réduire, et de préférence annuler, l'amplitude des oscillations, il est possible dans une première approche de désactiver le système vibratoire, c'est-à-dire d'agir sur la source des oscillations, pour par exemple arrêter d'en générer ou les générer avec une amplitude moindre. La figure 7C illustre cette première approche dans le cadre du fraisurage ; on voit que les oscillations sont interrompues à un instant donné à la fin du cycle de fraisurage, permettant de conserver la phase de glaçage sans oscillations axiales, comme dans le fraisurage conventionnel.

Dans une deuxième approche, l'amplitude des oscillations axiales est réduite, de préférence annulée, en les passivant, c'est-à-dire en faisant en sorte que les vibrations sur la surface en cours d'usinage soient moindres, voire pratiquement nulles, grâce à l'absorption des vibrations par un organe élastique d'amortissement. La figure 7D illustre cette deuxième approche dans le cadre du fraisurage. On voit que l'organe élastique d'amortissement limite l'effort maximum et absorbe les ondulations en fin de cycle. On retrouve une phase stabilisée de glaçage.

Ces deux approches peuvent se combiner, le cas échéant.

L'amplitude des oscillations axiales peut avantageusement être annulée durant l'étape b), c'est-à-dire que l'outil tourne alors sans vibrer axialement.

L'outil peut être soumis à une avance durant l'étape b). Dans une variante, l'outil n'est soumis à aucune avance durant l'étape b).

Le procédé selon l'invention peut être mis en oeuvre avec divers dispositifs d'usinage tels que définis à la revendication 13. Dans un exemple de mise en oeuvre du procédé, l'usinage axial est réalisé à l'aide d'un dispositif d'usinage reprenant certaines caractéristiques de celui décrit dans la demande FR 2 952 563, encore appelé UPAM, notamment le mécanisme d'avance et de dégagement de la broche porte-outil et la façon de générer les oscillations axiales, mais d'autres dispositifs peuvent être utilisés.

Le dispositif d'usinage utilisé comporte par exemple une broche porte-outil, tournant à l'intérieur d'un bâti, ce dernier logeant un système de transmission provoquant l'avance automatique de la broche relativement au bâti sous l'effet de l'entraînement en rotation de la broche porte-outil, ce système de transmission comportant par exemple un pignon d'avance vissé sur la broche.

Le dispositif peut comporter un roulement comportant des organes de roulement roulant sur une surface de roulement ondulée avec une composante axiale d'oscillation, de façon à solliciter périodiquement en déplacement la broche.

Plus précisément, le roulement peut comporter une bague lisse et une bague ondulée, entre lesquelles roulent les organes de roulement. L'une des bagues, par exemple la bague lisse, est fixe relativement à un bâti, tandis que l'autre bague, par exemple la bague ondulée, peut être mobile ou non par rapport au bâti. Pour rendre cette autre bague mobile par rapport au bâti, il est possible d'utiliser au moins un organe de liaison capable de prendre deux positions, l'une de couplage où il solidarise en rotation ladite bague avec un pignon d'entraînement et l'autre où il désaccouple ladite bague et le pignon d'entraînement. Cet organe de liaison est par exemple une bille d'arcboutement qui lorsqu'elle est bloquée en position de couplage contre le pignon d'entraînement et la bague, par une came, amène par effet de coincement les deux à tourner ensemble. Lorsque la came ne bloque pas l'organe de liaison, ce dernier permet à ladite bague de rester folle. La came est de préférence mobile axialement selon l'axe de la broche et déplacée au terme d'une course prédéfinie de la broche, pour désactiver le système vibratoire. Par exemple, la broche comporte une butée qui vient déplacer la came, en agissant sur celle-ci directement ou indirectement. Un organe de rappel élastique peut être prévu pour ramener la came dans la position initiale de blocage de l'organe de liaison, lors de la remontée de la broche.

Dans une variante de réalisation mettant en oeuvre également une désactivation du système vibratoire, ce dernier peut comporter également deux bagues dont l'une est lisse et l'autre ondulée et des organes de roulement entre les deux. L'une des bagues, par exemple la bague lisse, est soit folle par rapport au bâti et entraînée en rotation avec le pignon d'entraînement, soit fixe par rapport au bâti, tandis que l'autre bague, par exemple la bague ondulée, tourne avec le pignon d'entraînement. Pour rendre la bague folle ou fixe, un mécanisme peut agir pour écarter ou non cette bague d'une surface d'appui fixe relativement au bâti. Dans la position écartée, la bague est folle, et dans la position d'appui, elle est fixe relativement au bâti. Le mécanisme comporte par exemple au moins une rangée d'organes de roulements tels que des billes et une came qui déplace radialement les organes de roulement plus ou moins contre deux surfaces inclinées qui génèrent une poussée axiale d'écartement de la bague et de la surface d'appui. La came peut être déplacée axialement, directement ou indirectement, par une butée solidaire de la broche. Un organe de rappel élastique est avantageusement prévu pour ramener la came dans sa position initiale lors de la remontée de la broche. Cet organe de rappel élastique s'interpose par exemple entre le pignon d'entraînement et la came.

Dans un exemple de réalisation où le système vibratoire est passivé, le dispositif peut comporter un fourreau et un guide tournant à l'intérieur du fourreau, relié par une liaison glissière à un arbre portant l'outil. Un système vibratoire s'interpose axialement entre le fourreau et le guide et transmet des oscillations axiales au guide, donc à l'outil, lors de la rotation du guide. Le système vibratoire comporte par exemple deux bagues, notamment une bague lisse et une bague ondulée, animées d'une vitesse de rotation relative l'une par rapport à l'autre, l'une des bagues, par exemple la bague lisse, étant en liaison complète avec le fourreau et l'autre bague, par exemple la bague ondulée, étant par exemple en rotation avec le guide, et sollicitée axialement en appui, contre des organes de roulement s'étendant entre les deux bagues, par un organe d'amortissement élastique, dont la raideur est suffisante pour que, durant l'opération d'usinage axial, tant que le fourreau n'est pas bloqué contre la pièce à usiner, le système vibratoire puisse transmettre des vibrations à l'arbre portant l'outil, le fourreau étant libre de se déplacer axialement mais étant immobilisé en rotation.

Le dispositif est agencé de telle sorte qu'au terme d'une certaine avance, le fourreau soit bloqué axialement contre la pièce à usiner. Le guide peut continuer à avancer, donc l'outil peut continuer l'usinage ; les oscillations axiales ne sont pas transmises à l'outil, car le fourreau est bloqué, et sont absorbées par l'organe élastique d'amortissement.

D'une façon générale, les étapes b) de diminution, notamment d'annulation, de l'amplitude des oscillations axiales et c) de dégagement de l'outil de coupe peuvent être décalées dans le temps d'une temporisation dont la durée dépend de divers réglages mécaniques, pouvant être fixes ou, préférentiellement, variables. L'intérêt de rendre ces réglages variables réside dans le fait qu'il peut être nécessaire de changer la durée de temporisation en fonction de l'avance au tour de la broche porte-outil et de l'amplitude des oscillations.

L'outil peut servir à réaliser un lamage, un surfaçage, une fraisure ou un alésage conique.

L'invention a encore pour objet un dispositif d'usinage axial permettant la mise en oeuvre du procédé selon l'invention, tel que défini plus haut, et pouvant comporter l'une au moins des caractéristiques ci-dessus.

L'invention pourra être mieux comprise à la lecture de la description détaillée qui va suivre, d'exemples non limitatifs de mise en oeuvre de celle-ci, et à l'examen du dessin annexé, sur lequel :
- la figure 1 est une coupe axiale, partielle et schématique, d'un exemple de dispositif pour la mise en oeuvre de l'invention (dans sa variante avec désactivation des vibrations), en configuration d'usinage assisté par vibrations,
- les figures 1A et 1B représentent respectivement le pignon d'entraînement et la came,
- les figures 1C et 1D représentent en élévation la came, la bille d'arcboutement et le pignon d'entraînement, respectivement pour des positions haute et basse de la came,
- la figure 2 représente le dispositif de la figure 1 en configuration de désactivation des vibrations,
- la figure 3 est une vue analogue à la figure 1 d'une variante de réalisation du dispositif (dans sa variante avec désactivation des vibrations), en configuration d'usinage assisté par vibrations,
- la figure 4 représente le dispositif de la figure 3 en configuration de désactivation des vibrations,
- la figure 5 est une coupe axiale, partielle et schématique, d'un exemple de dispositif pour la mise en oeuvre de l'invention (dans sa variante avec passivation des vibrations), en configuration d'usinage assisté par vibrations,
- la figure 6 représente le dispositif de la figure 5 en configuration de passivation des vibrations, et
- les figures 7A à 7D, précédemment décrites, illustrent le profil d'effort en fonction du temps pour divers procédés de fraisurage.

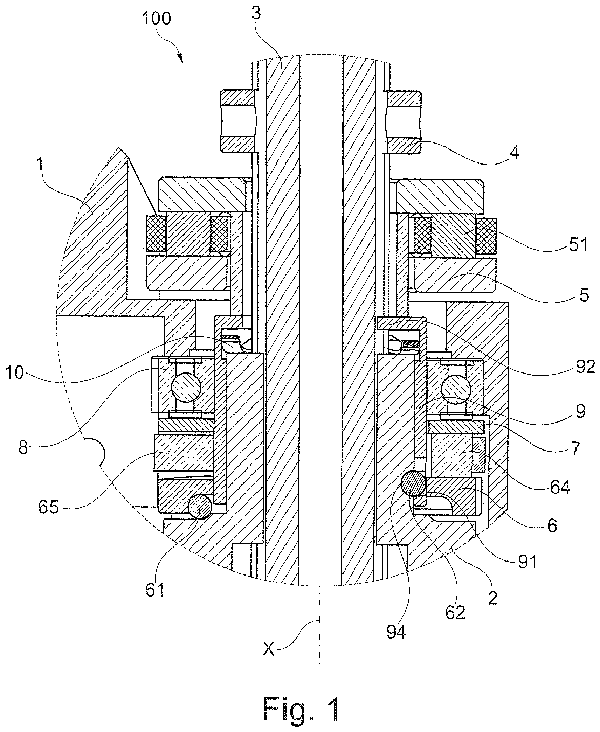

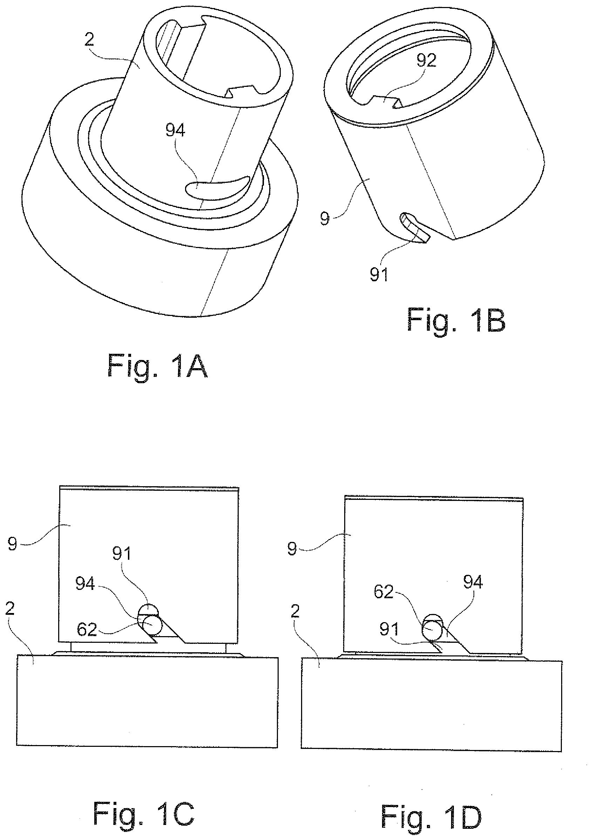

On va maintenant décrire des exemples de dispositifs pour la mise en oeuvre de l'invention, en se référant aux figures 1 à 4, dans lesquels les vibrations sont désactivées à l'étape b) précitée du procédé. Ces dispositifs sont par exemple des unités de perçage automatiques (UPA) équipées d'un système vibratoire intégré.

La description qui suit porte essentiellement sur les moyens assurant le débrayage, les moyens assurant l'avance et la génération des oscillations axiales étant connus en eux-mêmes, par exemple de FR 2 952 563.

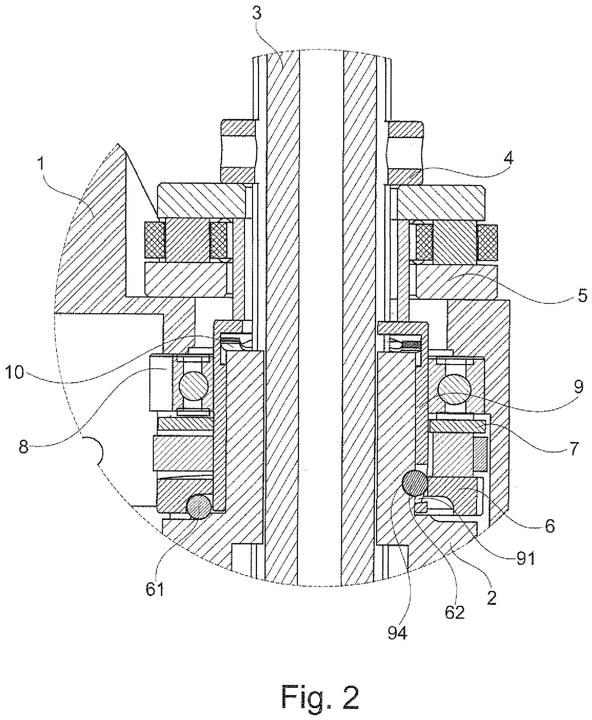

Le dispositif d'usinage 100 représenté aux figures 1 et 2 comporte une broche 3 en liaison glissière avec un pignon d'entraînement 2, représenté de façon schématique et partielle, isolément, à la figure 1A, qui l'entraîne en rotation autour d'un axe X, de façon connue en soi.

La broche 3 est en liaison hélicoïdale avec un pignon d'avance (non représenté) qui l'entraîne en translation.

La combinaison de ces deux mouvements génère respectivement les vitesses de coupe et d'avance de l'outil (non représenté) lié à la broche 3.

Le pignon d'entraînement 2 est en liaison pivot glissant avec un bâti 1, par l'intermédiaire d'un roulement de guidage 8.

Le système vibratoire de génération des oscillations axiales est constitué dans cet exemple d'une bague ondulée 6, d'une bague lisse 7 et d'organes de roulement tels que des rouleaux 64, maintenus en position à l'aide d'une cage 65.

La vitesse relative entre la bague ondulée 6 et la bague lisse 7 génère des oscillations, comme décrit dans la demande FR 2 952 563.

La bague ondulée 6 est en liaison pivot avec le pignon d'entraînement 2 par l'intermédiaire d'organes de roulement 61, tels que des billes.

La bague lisse 7 est fixe sur le bâti 1.

Une came 9, représentée isolément à la figure 1B, est en liaison glissière avec la broche 3, grâce à un ergot 92 engagé dans une rainure axiale de la broche 3.

La came 9 comporte une fente 91 sensiblement hélicoïdale, et le pignon d'entraînement 2 une gorge axiale 94, d'axe perpendiculaire à l'axe de rotation, et de section circulaire.

Un organe de liaison telle qu'une bille d'arc-boutement 62 est engagée dans la fente 91 et dans la gorge 94 du pignon d'entraînement 2; la largeur de la fente 91 et de la gorge 94 du pignon d'entraînement 2 correspondent sensiblement au diamètre de la bille 62, laquelle est ainsi en liaison linéaire annulaire avec le pignon 2 et la came 9.

En position haute de la came 9, comme illustré à la figure 1C, la bille 62 est forcée par la came 9 et la gorge 94 à s'appliquer contre la bague ondulée 6.

Une butée mobile 5, constituée par exemple par une butée à rouleaux 51, comme illustré, est en liaison pivot glissant avec la came 9.

Une butée fixe 4 est fixée à la broche 3, par exemple de façon réglable.

Un organe de rappel élastique 10 tend à éloigner la came 9 du pignon d'entraînement 2, par exemple en s'interposant comme illustré entre un épaulement défini sous l'ergot 92 de la came 9 et l'extrémité supérieure du pignon 2.

### Phase de fonctionnement a/

Durant cette phase de fonctionnement, l'organe de rappel élastique 10 maintient la came 9 en position haute, comme illustré à la figure 1.

Dans cette position haute, la came 9, par combinaison des profils de la gorge 94 et de la fente 91, place la bille d'arc-boutement 62 dans une position de couplage, illustrée à la figure 1C, où elle rend solidaire la bague ondulée 6 et le pignon d'entraînement 2 par un effet d'arcboutement.

La liaison complète entre le pignon d'entraînement 2 et la bague ondulée 6 ainsi constituée permet de transmettre la vitesse de rotation autour de l'axe X du pignon d'entraînement 2 à la bague ondulée 6.

La vitesse relative de la bague ondulée 6 avec la bague lisse 7 du système vibratoire génère des oscillations axiales selon l'axe X.

Ces oscillations axiales sont transmises à la broche 3 via le pignon d'entraînement 2 puis le pignon d'avance (non représenté).

Dans cette phase, l'usinage axial est donc soumis à des oscillations axiales venant se superposer à un mouvement d'avance constant de la broche 3.

### Phase de fonctionnement b/

En fin de course d'usinage axial, la butée fixe 4 solidaire de la broche 3 vient, dans un premier temps, faire translater la butée mobile 5 selon l'axe X.

Le déplacement de la butée mobile 5 s'accompagne de la translation de la came 9, laquelle amène la bille d'arc-boutement 62 dans une position de débrayage, illustrée à la figure 1D, qui libère la bague ondulée 6. Cette dernière n'est alors plus solidaire en rotation du pignon d'entraînement 2 et devient folle.

Le frottement interne du système vibratoire conduit à l'arrêt en rotation de la bague ondulée 6. Cette dernière et la bague lisse 7 n'ont plus de vitesse relative.

La génération des oscillations axiales est désactivée, la broche 3 pouvant néanmoins continuer d'avancer.

Durant la phase b), l'usinage axial est soumis au seul mouvement d'avance constant de la broche 3. Il devient un usinage axial conventionnel, jusqu'à son arrêt en fin de course.

### Phase c/

En fin de course d'usinage axial, la butée fixe 4 solidaire de la broche 3 vient mettre la butée mobile 5 au contact du bâti 1, comme illustré à la figure 2.

Le contact entre la butée mobile 5 et le bâti 1 arrête en translation la broche 3.

Le blocage de la broche 3 en translation provoque le mouvement de dégagement.

En reculant, la broche 3 et la butée fixe 4 libèrent la butée mobile 5.

La libération de la butée mobile 5 remet le système en position d'origine, grâce à l'organe de rappel élastique 10.

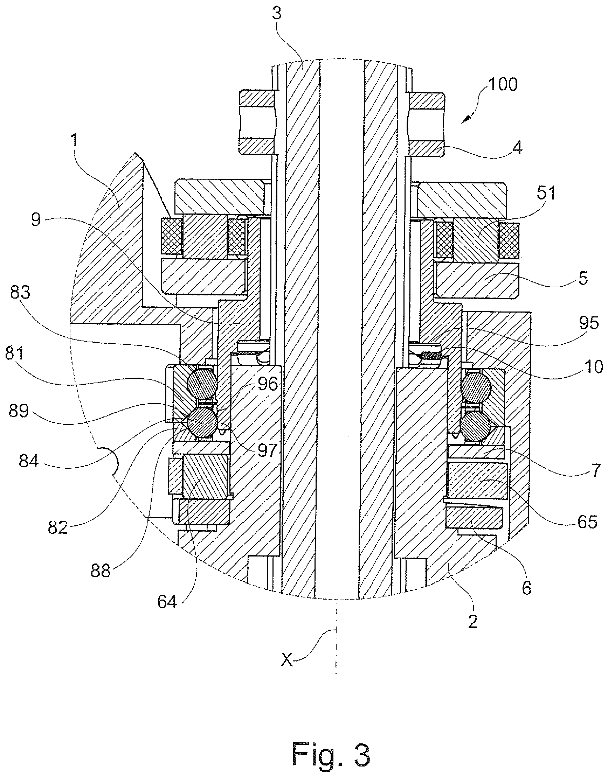

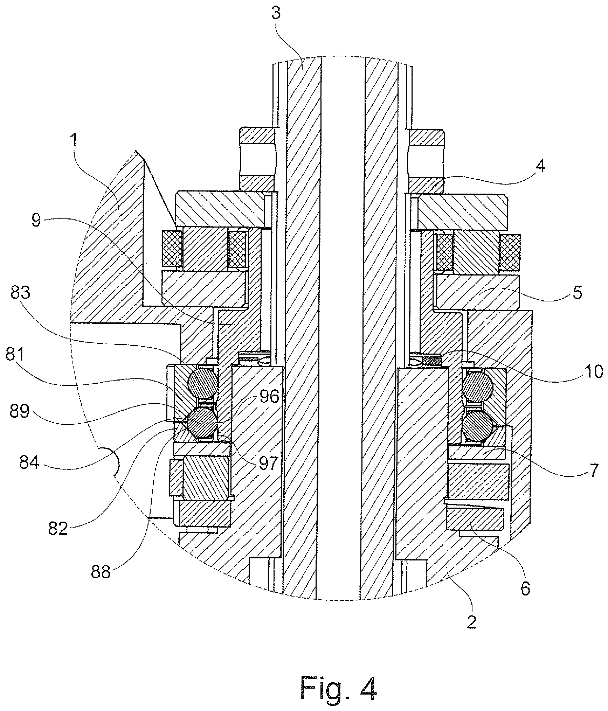

On va maintenant décrire, en se référant aux figures 3 et 4, une variante de réalisation du dispositif 100. Sur ces figures, les références numériques sont conservées pour les éléments constitutifs identiques ou similaires à ceux précédemment décrits en référence aux figures 1 et 2.

Comme dans l'exemple précédent, la broche 3 est en liaison glissière avec le pignon d'entraînement 2 qui l'entraîne en rotation, et la broche 3 est en liaison hélicoïdale avec le pignon d'avance (non représenté) qui l'entraîne en translation.

La combinaison de ces deux mouvements génère respectivement les vitesses de coupe et d'avance de l'outil (non représenté) lié à la broche 3.

Le pignon d'entraînement 2 est en liaison pivot glissant avec le bâti 1 par l'intermédiaire d'un roulement de guidage comportant une bague 81 et des organes de roulement 83 tels que des billes.

Le système vibratoire, de génération des oscillations axiales, est constitué dans l'exemple considéré d'une bague ondulée 6, d'une bague lisse 7 et d'organes de roulements maintenus en position à l'aide d'une cage 65, en l'espèce des rouleaux 64 comme dans l'exemple précédent.

La vitesse relative entre la bague ondulée 6 et la bague lisse 7 génère des oscillations axiales.

La bague ondulée 6 est fixe relativement au pignon d'entraînement 2 et tourne avec celui-ci.

La bague lisse 7 est en liaison pivot avec le bâti 1 par l'intermédiaire d'organes de roulement 84 tels que des billes et d'une bague externe 82 ayant un pan oblique 88.

La came 9 est en liaison glissière avec la broche 3, et constitue une bague intérieure pour les organes de roulements 83 et 84.

La butée mobile 5 est constituée dans l'exemple illustré par une butée à rouleaux 51 en liaison pivot glissant avec la came 9 selon l'axe X.

L'organe de rappel élastique 10 tend à éloigner la came 9 du pignon d'entraînement 2, en s'interposant axialement entre un épaulement 95 de la came 9 et le pignon d'entraînement 2.

Les organes de roulement 83 tournent entre la came 9 qui constitue une bague interne pour ceux-ci et une bague externe 81 présentant un pan oblique 89 disposé sensiblement à angle droit du pan oblique 88 de la bague externe 82.

### Phase de fonctionnement a/

L'élément de rappel élastique 10 maintient la came 9 en position haute.

La came 9 présente une portion inférieure 97 dont le diamètre de bague interne pour les organes de roulement 84 permet d'assurer le contact entre les bagues externes 81 et 82, comme illustré à la figure 3.

Ce contact entre les bagues externes 81 et 82 rend la bague lisse 7 solidaire du bâti 1.

La liaison complète entre le bâti 1 et la bague lisse 7 ainsi constituée permet d'arrêter en rotation la bague lisse 7.

La vitesse relative de la bague ondulée 6 par rapport à la bague lisse 7 permet de générer des oscillations axiales, lesquelles sont transmises à la broche 3 via le pignon d'entraînement 2 puis le pignon d'avance (non représenté).

Durant cette phase, l'usinage axial est donc soumis à des oscillations axiales venant se superposer au mouvement d'avance constant de la broche 3.

### Phase de fonctionnement b/

En fin de course d'usinage axial, la butée fixe 4 solidaire de la broche 3 vient, dans un premier temps, faire translater la butée mobile 5, laquelle déplace la came 9 vers le bas sur les figures.

La translation de la came 9 amène les organes de roulement 84 à rouler sur une portion supérieure 96 de la came 9, dont le diamètre est supérieur à celui de la portion inférieure 97.

Le déplacement radial des organes de roulement 84 contre les pans obliques 88 et 89, fait se désolidariser en rotation les bagues externes 81 et 82. La bague lisse 7 n'est plus solidaire du bâti 1 et devient folle.

Le frottement interne du système vibratoire permet d'entraîner en rotation la bague lisse 7.

La bague ondulée 6 et la bague lisse 7 n'ont alors plus de vitesse relative.

La génération des oscillations axiales est désactivée, la broche 3 continuant d'avancer. Durant cette phase, l'usinage axial est donc soumis au seul mouvement d'avance constant de la broche 3. Il devient un usinage axial conventionnel, jusqu'à son arrêt en fin de course.

### Phase c/

En fin de course d'usinage axial, la butée fixe 4 solidaire de la broche 3 vient mettre la butée mobile 5 au contact du bâti 1, ce qui arrête en translation la broche 3 et va provoquer le mouvement de dégagement.

En reculant, la broche 3 et la butée fixe 4 libèrent la butée mobile 5, ce qui remet le système en position d'origine grâce à l'organe de rappel élastique 10.

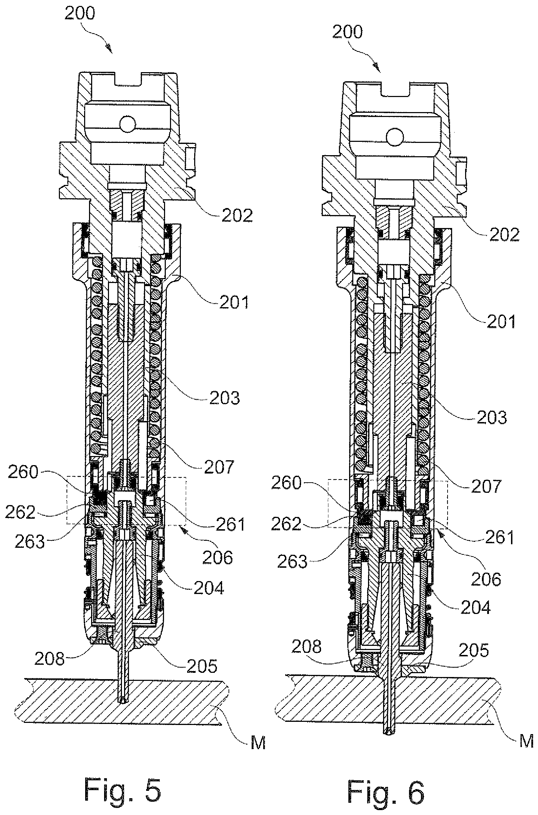

On va maintenant décrire en se référant aux figures 5 et 6 une variante de réalisation dans laquelle les oscillations axiales sont passivées.

Le dispositif 200 représenté sur ces figures est intégré à un porte-outil pour machine à commande numérique et destiné à effectuer des opérations de perçage/fraisurage au cours d'un même cycle.

Le dispositif 200 comporte un attachement 202 en liaison complète avec la broche de la machine et un guide 203 en liaison glissière avec l'attachement 202.

Un organe d'amortissement élastique 207 permet de générer une précharge sur le guide 203, orientée dans le sens de l'avance et supérieure aux efforts de poussée de l'outil 208 lors de l'opération de perçage/fraisurage.

Un arbre 204 est en liaison glissière avec le guide 203.

Le dispositif 200 comporte un système vibratoire 206 comportant une bague ondulée 260, des organes de roulement 261, une bague lisse 262, fixe, et une butée à aiguilles 263, qui permet de générer des oscillations axiales entre le guide 203 et l'arbre 204 lorsqu'il y a un mouvement relatif de rotation entre la bague ondulée 260 et la bague lisse 262.

L'outil 208 est en liaison complète démontable avec l'arbre 204.

Le dispositif 200 comporte également un fourreau 201 en liaison pivot glissant avec l'attachement 202.

Le fourreau 201 est maintenu fixe en rotation (par des moyens non représentés) sur le bâti de la machine (non représenté), mais peut se déplacer axialement.

La bague lisse 262 est en liaison complète avec le fourreau 201. Ce dernier est muni à son extrémité distale d'une pièce de butée telle qu'un tripode 205 en liaison complète réglable avec le fourreau 201 ; sa position axiale est réglée de manière à ce que la face avant du tripode 205 corresponde avec la position axiale de fin de fraisurage de l'outil 208.

### Phase de fonctionnement a/

La mise en rotation de la broche entraîne la mise en rotation de l'attachement 202 et consécutivement, du guide 203, de l'arbre 204 et de l'outil 208.

La vitesse de rotation relative entre la bague ondulée 260 et la bague fixe 262 génère une oscillation axiale qui est transmise au guide 204 et à l'outil 208.

L'avance de la broche fait translater de manière monobloc l'ensemble des pièces constitutives du dispositif 200.

Associées au mouvement de coupe (rotation), l'avance de la broche (constante) et les oscillations axiales générées par le système vibratoire 206 provoquent un mouvement combiné apte à satisfaire l'usinage axial dans la matière M à percer/fraisurer.

### Phase de fonctionnement b/

En fin de cycle d'usinage axial, la matière M vient au contact du tripode 205.

Ce dernier étant en liaison complète avec la bague lisse 262 par le biais du fourreau 201, le contact avec la matière M arrête en translation l'arbre 204 et l'outil 208.

Les oscillations générées par le système vibratoire 206 sont intégralement retransmises à l'organe d'amortissement élastique 207 ainsi que le mouvement d'avance constant de la broche.

L'outil 208 continue donc de tourner sans avancer. Les quelques tours de rotation de l'outil 208 dans la matière M permettent de « glacer la surface », c'est-à-dire d'obtenir une surface conforme à l'usinage axial de forme (fraisurage) en fin de cycle.

### Phase c/

La machine à commande numérique est programmée pour effectuer une légère surcourse qui est absorbée par l'organe d'amortissement élastique 207 ; puis pour revenir en arrière en position de dégagement.

En reculant, la libération du contact entre la matière M et le tripode 205 permet à l'organe d'amortissement élastique 207 de ramener le dispositif 200 dans sa configuration d'origine.

Bien entendu, l'invention n'est pas limitée aux exemples illustrés.

Par exemple, le système vibratoire peut être réalisé autrement qu'avec des organes de roulement tournant entre une bague lisse et une bague ondulée.

Ainsi, dans une variante non illustrée, les organes de roulement tournent entre deux surfaces ondulées dont le déphasage est réglable, comme décrit dans la publication WO 2008/000935 ; le déphasage est alors contrôlé en fonction de l'avance de façon à désactiver le système vibratoire au terme d'un mouvement d'avance prédéfini.

Dans d'autres variantes, le système vibratoire est électromécanique, pneumatique, hydraulique, piézoélectrique ou autre.

Bien que l'invention s'applique préférentiellement à l'usinage axial de forme, l'invention trouve encore avantageusement à s'appliquer au tournage.

L'expression "comportant un" doit se comprendre comme étant synonyme de "comportant au moins un".

## Revendications

1. Procédé d'usinage faisant intervenir au moins un usinage de forme, comportant :
a) la réalisation d'un usinage sur une première distance à l'aide d'un outil de coupe soumis lors de son avance à des oscillations axiales, puis
b) la diminution, notamment l'annulation, de l'amplitude des oscillations axiales, tout en continuant d'entraîner l'outil de coupe en rotation.

2. Procédé selon la revendication 1, l'amplitude des oscillations axiales étant réduite à zéro durant l'étape b).

3. Procédé selon l'une des revendications 1 ou 2, l'outil étant soumis à une avance durant l'étape b).

4. Procédé selon l'une des revendications 1 ou 2, l'outil n'étant soumis à aucune avance durant l'étape b).

5. Procédé selon l'une quelconque des revendications 1 à 4, la diminution de l'amplitude des oscillations axiales résultant d'une action sur un système vibratoire (7,64,6; 260,261,262) à l'origine des oscillations.

6. Procédé selon la revendication 5, les oscillations axiales étant obtenues à l'aide d'organes de roulement (64 ;261) tournant au contact d'une surface de roulement ondulée.

7. Procédé selon la revendication précédente, les oscillations axiales étant obtenues par roulement entre deux surfaces de roulement dont l'une au moins est ondulée, les surfaces ayant, durant la production des oscillations, des vitesses de rotation différentes, la diminution de l'amplitude étant obtenue par une diminution de la vitesse relative de rotation entre lesdites surfaces, notamment en amenant ces deux surfaces à tourner à la même vitesse ou à s'immobiliser toutes deux.

8. Procédé selon la revendication 7, dans lequel on agit sur une came (9) au terme d'une avance prédéfinie de l'outil, cette came ayant un déplacement axial et étant agencée pour agir sur une liaison (2,62,6 ; 81,84,82) entre une bague (6;7) définissant une surface de roulement pour lesdits organes de roulement (64) et le bâti (1) ou une partie tournante (2), notamment un pignon d'entraînement (2) de la broche, de façon à ce que la modification de la liaison qui résulte du mouvement de la came (9) conduise à une modification de la vitesse relative entre lesdites surfaces de roulement.

9. Procédé selon l'une quelconque des revendications 1 à 6, dans lequel l'amplitude des oscillations est diminuée par passivation.

10. Procédé selon la revendication 9, la passivation étant obtenue grâce à un organe d'amortissement élastique (207) absorbant tout ou partie des efforts de vibration.

11. Procédé selon la revendication 10, le système vibratoire (206) étant, lors de la passivation, d'un côté directement ou indirectement en appui axialement contre la matière (M) à usiner et sollicitant de l'autre côté l'organe d'amortissement élastique (207).

12. Procédé selon l'une quelconque des revendications précédentes, l'outil (4) étant adapté à réaliser un usinage axial de forme, notamment un fraisurage, un lamage, un surfaçage, ou un alésage conique.

13. Dispositif (100 ; 200) d'usinage permettant la mise en oeuvre du procédé tel que défini dans l'une quelconque des revendications précédentes, comportant :
- un support d'un outil de coupe,
- un système vibratoire pour soumettre l'outil de coupe à des oscillations axiales, dispositif **caractérisé en ce qu'**il comporte un moyen (4,5,9,62; 4,5,9,84; 205,207) permettant de diminuer, notamment d'annuler, automatiquement l'amplitude des oscillations au terme d'un déplacement prédéfini de l'outil de coupe, de façon à réaliser un usinage de forme.

14. Dispositif selon la revendication 13, comportant une broche porte-outil, tournant à l'intérieur d'un bâti, ce dernier logeant un système de transmission provoquant l'avance automatique de la broche relativement au bâti sous l'effet de l'entraînement en rotation de la broche porte-outil.

15. Dispositif selon la revendication 13 ou 14, le système vibratoire comportant un roulement comportant des organes de roulement (64; 261) roulant sur une surface de roulement ondulée avec une composante axiale d'ondulation, de façon à solliciter périodiquement en déplacement l'outil.

16. Dispositif selon la revendication 15, le roulement comportant une bague lisse et une bague ondulée, entre lesquelles tournent les organes de roulement (64), l'une des bagues, notamment la bague lisse (7), étant fixe relativement à un bâti (1), tandis que l'autre bague, notamment la bague ondulée (6), est mobile ou non par rapport au bâti, le dispositif comportant un organe de liaison (62) capable de prendre deux positions, l'une de couplage où il solidarise en rotation la bague ondulée (6) mobile ou non avec un pignon d'entraînement (2) et l'autre où il désaccouple ladite bague et le pignon d'entraînement (2), cet organe de liaison étant de préférence une bille d'arcboutement (62) qui, lorsqu'elle est bloquée en position de couplage contre le pignon d'entraînement (2) et la bague ondulée (6), par une came (9), amène par effet d'arcboutement les deux à tourner ensemble, et lorsque la came (9) ne bloque pas l'organe de liaison (2), ce dernier permet à la bague ondulée (6) de rester folle, la came (9) étant de préférence mobile axialement selon l'axe (X) de l'outil et déplacée au terme d'une course prédéfinie de la broche, pour désactiver le système vibratoire, la broche comportant de préférence une butée (4) qui vient déplacer la came (9), en agissant sur celle-ci directement ou indirectement, un organe de rappel élastique (10) étant prévu pour ramener la came (9) dans la position initiale de blocage de l'organe de liaison lors de la remontée de la broche.

17. Dispositif selon la revendication 15, le roulement comportant une bague lisse et une bague ondulée, entre lesquelles tournent les organes de roulement (64), l'une des bagues, notamment la bague lisse, étant soit folle par rapport à un bâti (1) et entraînée en rotation avec un pignon d'entraînement (2), soit fixe par rapport au bâti, tandis que l'autre bague, notamment la bague ondulée (6), tourne avec le pignon d'entraînement (2), un mécanisme étant prévu pour écarter ou non cette bague (7) d'une surface d'appui fixe relativement au bâti, de telle sorte que dans la position écartée, la bague (7) est folle, et dans la position d'appui, elle est fixe relativement au bâti (1), le mécanisme comportant de préférence une rangée d'organes de roulement tels que des billes (84) et une came (9) qui déplace radialement ces organes de roulement (84) plus ou moins contre deux surfaces inclinées (88, 89) qui génèrent une poussée axiale d'écartement de la bague (7) et de la surface d'appui, la came étant déplacée axialement, directement ou indirectement, par une butée (4) solidaire de la broche, un organe de rappel élastique étant de préférence prévu pour ramener la came (9) dans sa position initiale lors de la remontée de la broche, cet organe de rappel élastique s'interposant entre le pignon d'entraînement (2) et la came (9).

18. Dispositif selon la revendication 14 ou 15, comportant un fourreau (201) et un guide (203) tournant à l'intérieur du fourreau, relié par une liaison glissière à un arbre (204) portant l'outil (208), le système vibratoire (206) s'interposant axialement entre le fourreau et le guide et transmettant des oscillations axiales au guide et à l'outil, lors de la rotation du guide, le système vibratoire comportant de préférence deux bagues, notamment une bague lisse et une bague ondulée, animées d'une vitesse de rotation relative l'une par rapport à l'autre, l'une des bagues, notamment la bague lisse (262), étant en liaison complète avec le fourreau et l'autre bague, notamment la bague ondulée (260), étant en rotation avec le guide, et sollicitée axialement en appui contre des organes de roulement (261) s'étendant entre les deux bagues par un organe d'amortissement élastique (207), dont la raideur est suffisante pour que durant l'opération d'usinage axial, tant que le fourreau n'est pas bloqué contre la pièce à usiner (M), le système vibratoire puisse transmettre des oscillations axiales à l'arbre portant l'outil, le fourreau étant libre de se déplacer axialement mais immobilisé en rotation, le dispositif (200) étant agencé de telle sorte qu'au terme d'une certaine avance, le fourreau soit bloqué axialement contre la pièce à usiner, le guide (203) pouvant continuer à avancer, les oscillations axiales n'étant alors pas transmises à l'outil et absorbées par l'organe élastique d'amortissement (207).

## Patentansprüche

1. Bearbeitungsverfahren, bei dem mindestens eine Formbearbeitung eingesetzt wird, umfassend:
a) die Durchführung einer Bearbeitung über eine erste Strecke mittels des Schneidwerkzeugs, das bei seinem Vorschub axialen Schwingungen unterzogen wird, dann
b) die Verringerung, insbesondere die Aufhebung, der Amplitude der axialen Schwingungen unter Fortsetzung des Antriebs des Schneidwerkzeugs in Drehung.

2. Verfahren nach Anspruch 1, wobei die Amplitude der axialen Schwingungen während des Schritts b) auf null reduziert wird.

3. Verfahren nach einem der Ansprüche 1 oder 2, wobei das Werkzeug während des Schritts b) einem Vorschub ausgesetzt wird.

4. Verfahren nach einem der Ansprüche 1 oder 2, wobei das Werkzeug während des Schritts b) keinem Vorschub ausgesetzt wird.

5. Verfahren nach einem der Ansprüche 1 bis 4, wobei die Verringerung der Amplitude der axialen Schwingungen aus einer Aktion auf ein Vibrationssystem (7,64,6; 260,261,262) am Ursprung der Schwingungen resultieren.

6. Verfahren nach Anspruch 5, wobei die axialen Schwingungen mittels Rollorgane (64; 261) erlangt werden, die in Kontakt mit einer gewellten Rollfläche drehen.

7. Verfahren nach dem vorherigen Anspruch, wobei die axialen Schwingungen durch Rollen zwischen zwei Rollflächen erlangt werden, wovon eine mindestens gewellt ist, wobei die Flächen während der Erzeugung der Schwingungen unterschiedliche Drehgeschwindigkeiten haben, wobei die Verringerung der Amplitude durch eine Verringerung der relativen Drehgeschwindigkeit zwischen den Flächen erlangt wird, insbesondere indem diese zwei Flächen veranlasst werden, mit der gleichen Geschwindigkeit zu drehen, oder indem beide immobilisiert werden.

8. Verfahren nach Anspruch 7, wobei nach einem vordefinierten Vorschub des Werkzeug auf eine Nocke (9) gewirkt wird, wobei diese Nocke eine axiale Bewegung hat und angeordnet ist, um auf eine Verbindung (2,62,6 ; 81,84,82) zwischen einem Ring (6; 7), der eine Rollfläche für die Rollorgane (64) definiert, und einem Gestell (1) oder einem drehenden Teil (2), insbesondere ein Antriebsritzel (2) der Spindel, zu wirken, sodass die Veränderung der Verbindung, die aus der Bewegung der Nocke (9) resultiert, zu einer Veränderung der relativen Geschwindigkeit zwischen den Rollflächen führt.

9. Verfahren nach einem der Ansprüche 1 bis 6, wobei die Amplitude der Schwingungen durch Passivierung verringert wird.

10. Verfahren nach Anspruch 9, wobei die Passivierung durch ein elastisches Dämpfungselement (207) erlangt wird, das alle oder Teile der Vibrationskräfte absorbiert.

11. Verfahren nach Anspruch 10, wobei das Vibrationssystem (206) während der Passivierung auf einer Seite direkt oder indirekt in axialer Anlage gegen den Werkstoff (M) ist und auf der anderen Seite das elastische Dämpfungselement (207) beansprucht.

12. Verfahren nach einem der vorherigen Ansprüche, wobei das Werkzeug (4) angepasst ist, um eine axiale Formbearbeitung durchzuführen, insbesondere eine Ausfräsung, eine Flachsenkung, einen Planschliff oder eine konische Bohrung.

13. Vorrichtung (100; 200) zum Bearbeiten, die eine Umsetzung des Verfahrens ermöglicht, wie es in einem der vorherigen Ansprüche definiert ist, umfassend:
- eine Halterung eines Schneidwerkzeugs,
- ein Vibrationssystem, um das Schneidwerkzeug axialen Schwingungen auszusetzen,
wobei die Vorrichtung **dadurch gekennzeichnet ist, dass** sie ein Mittel (4,5,9,62; 4,5,9,84; 205,207) umfasst, das ermöglicht, die Amplitude der Schwingungen nach einer vordefinierten Bewegung des Schneidwerkzeugs automatisch zu verringern, insbesondere aufzuheben, um eine Formbearbeitung auszuführen.

14. Vorrichtung nach Anspruch 13, umfassend eine Werkzeugspindel, die auf der Innenseite eines Gestells dreht, das ein Übertragungssystem aufnimmt, das einen automatischen Vorschub der Spindel in Bezug auf das Gestell unter der Wirkung des Drehantriebs der Werkzeugspindel hervorruft.

15. Vorrichtung nach Anspruch 13 oder 14, das Vibrationssystem umfassend ein Lager umfassend Rollorgane (64; 261), die auf einer gewellten Rollfläche mit einer axialen Wellungskomponente rollen, um das Werkzeug regelmäßig in Bewegung zu beanspruchen.

16. Vorrichtung nach Anspruch 15, das Lager umfassend einen glatten Ring und einen gewellten Ring, zwischen denen die Rollorgane (64) drehen, wobei einer der Ringe, insbesondere der glatte Ring (7), in Bezug auf ein Gestell (1) feststehend ist, während der andere Ring, insbesondere der gewellte Ring (6), mobil oder nicht mobil in Bezug auf das Gestell ist, die Vorrichtung umfassend ein Verbindungsorgan (62), das in der Lage ist, zwei Positionen einzunehmen, eine Kopplungsposition, in der es den gewellten Ring (6), der mobil oder nicht mobil ist, mit einem Antriebsritzel (2) verbindet, und eine andere Position, in der es die Kopplung des Rings und des Antriebsritzels (2) trennt, wobei dieses Verbindungsorgan vorzugsweise eine Klemmkugel (62) ist, die, wenn sie in Kopplungsposition durch eine Nocke (9) gegen das Antriebsritzel (2) und den gewellten Ring (6) blockiert ist, die zwei durch eine Klemmwirkung veranlasst, gemeinsam zu drehen, und wenn die Nocke (9) das Verbindungsorgan (2) nicht blockiert, dieses letztere dem gewellten Ring (6) erlaubt, freidrehend zu bleiben, wobei die Nocke (9) vorzugsweise axial mobil gemäß der Achse (X) des Werkzeugs ist und am Ende eines vordefinierten Verlaufs der Spindel bewegt wird, um das Vibrationssystem zu deaktivieren, wobei die Spindel vorzugsweise einen Anschlag (4) umfasst, der die Nocke (9) bewegt, indem er direkt oder indirekt auf sie wirkt, wobei ein elastisches Rückholelement (10) vorgesehen ist, um die Nocke (9) in die anfängliche Blockierungsposition des Verbindungsorgans beim Hochziehen der Spindel zurückzustellen.

17. Vorrichtung nach Anspruch 15, das Lager umfassend einen glatten Ring und einen gewellten Ring, zwischen denen die Rollorgane (64) drehen, wobei einer der Ringe, insbesondere der glatte Ring, der entweder freidrehend in Bezug auf ein Gestell (1) ist und mit einem Antriebsritzel (2) in Drehung angetrieben wird, oder feststehend in Bezug auf das Gestell ist, während der andere Ring, insbesondere der gewellte Ring (6) mit dem Antriebsritzel (2) dreht, wobei ein Mechanismus vorgesehen ist, um diesen Ring (7) von einer Stützfläche zu entfernen oder nicht, die feststehend in Bezug auf das Gestell ist, sodass der Ring (7) in der beabstandeten Position freidrehend ist, und in der Anlageposition feststehend in Bezug auf das Gestell (1) ist, wobei der Mechanismus vorzugsweise eine Anordnung von Rollorganen umfasst, wie z. B. Kugeln (84), und eine Nocke (9), die diese Rollorgane (84) mehr oder weniger gegen zwei geneigte Flächen (88, 89) bewegt, die eine axiale Vergrößerung des Abstands des Rings (7) und der Stützfläche erzeugen, wobei die Nocke axial und direkt oder indirekt durch einen Anschlag (4) bewegt wird, der an der Spindel befestigt ist, wobei vorzugsweise ein elastisches Rückholelement vorgesehen ist, um die Nocke (9) beim Hochziehen der Spindel in ihre anfängliche Position zurückzustellen, wobei dieses elastische Rückholelement zwischen das Antriebsritzel (2) und die Nocke (9) zwischengestellt ist.

18. Vorrichtung nach Anspruch 14 oder 15, umfassend ein Futter (201) und eine Führung (203), die auf der Innenseite des Futters dreht, das durch eine Gleitverbindung mit einer Welle (204) verbunden ist, die das Werkzeug (208) trägt, wobei das Vibrationssystem (206) axial zwischen das Futter und die Führung zwischengestellt ist und bei der Drehung der Führung axiale Schwingungen auf die Führung und auf das Werkzeug überträgt, das Vibrationssystem umfassend vorzugsweise zwei Ringe, insbesondere einen glatten Ring und einen gewellten Ring, die mit einer Drehgeschwindigkeit in Bezug aufeinander angetrieben werden, wobei einer der Ringe, insbesondere der glatte Ring (262), in vollständiger Verbindung mit dem Futter ist, und der andere Ring, insbesondere der gewellte Ring (260), in Drehung mit der Führung ist, und sich axial anliegend gegen Rollorgane (261) zwischen den zwei Ringen durch ein elastisches Dämpfungselement (207) erstreckt, dessen Radius ausreichend ist, damit das Vibrationssystem während des axialen Bearbeitungsvorgangs, bei dem das Futter nicht gegen das Werkstück (M) blockiert ist, axiale Schwingungen auf die Welle übertragen kann, die das Werkzeug trägt, wobei sich das Futter axial frei bewegen kann, seine Drehung aber blockiert ist, wobei die Vorrichtung (200) derart angeordnet ist, dass das Futter nach einem gewissen Vorschub axial gegen das Werkstück blockiert wird, wobei die Führung (203) den Vorschub fortsetzen kann, wobei dann die axialen Schwingungen nicht auf das Organ übertragen und durch das elastische Dämpfungselement (207) absorbiert werden.

## Claims

1. A machining method which involves at least one shaping machining operation, comprising:
a) carrying out a machining operation over a first distance using a cutting tool which is subjected to axial oscillations when it moves forward, then
b) reducing, in particular eliminating, the amplitude of the axial oscillations, whilst continuing to drive the cutting tool in terms of rotation.

2. The method as claimed in claim 1, the amplitude of the axial oscillations being reduced to zero during step b).

3. The method as claimed in claim 1 or claim 2, the tool being subjected to a forward movement during step b).

4. The method as claimed in claim 1 or claim 2, the tool being subjected to no forward movement during step b).

5. The method as claimed in one of claims 1 to 4, the reduction of the amplitude of the axial oscillations resulting from an action on a vibration system (7, 64, 6; 260, 261, 262) at the origin of the oscillations.

6. The method as claimed in claim 5, the axial oscillations being obtained using rolling members (64; 261) which rotate in contact with an undulating rolling surface.

7. The method as claimed in the preceding claim, the axial oscillations being obtained by means of rolling between two rolling surfaces, at least one of which is undulating, the surfaces having, during the production of the oscillations, different rotation speeds, the reduction of the amplitude being obtained by means of a reduction of the relative rotation speed between the surfaces, in particular by causing these two surfaces to rotate at the same speed or to both become immobilized.

8. The method as claimed in claim 7, wherein a cam (9) is acted on at the end of a predefined forward movement of the tool, this cam having an axial movement and being arranged so as to act on a connection (2, 62, 6; 81, 84, 82) between a ring (6; 7) which defines a rolling surface for the rolling members (64) and the frame (1) or a rotating portion (2), in particular a drive pinion (2) of the spindle, so that the modification of the connection which results from the movement of the cam (9) leads to a modification of the relative speed between the rolling surfaces.

9. The method as claimed in one of claims 1 to 6, wherein the amplitude of the oscillations is reduced by means of passivation.

10. The method as claimed in claim 9, the passivation being obtained by means of a resilient damping member (207) which absorbs all or part of the vibration forces.

11. The method as claimed in claim 10, the vibration system (206) during the passivation at one side being directly or indirectly in axial abutment against the material (M) to be machined and urging at the other side the resilient damping member (207).

12. The method as claimed in one of the preceding claims, the tool (4) being capable of carrying out an axial shaping machining operation, in particular a countersinking, a spot-facing, a surface refinement or a conical bore.

13. A device (100; 200) for machining which allows the method as defined in one of the preceding claims to be implemented, comprising:
- a cutting tool support,
- a vibration system in order to subject the cutting tool to axial oscillations,
the device being **characterized in that** it comprises a means (4, 5, 9, 62; 4, 5, 9, 84; 205, 207) which automatically enables the amplitude of the oscillations to be reduced, in particular eliminated, at the end of a predefined movement of the cutting tool, in order to carry out a shaping machining operation.

14. A device as claimed in claim 13, comprising a tool-carrying spindle which rotates inside a frame, the frame accommodating a transmission system which brings about the automatic forward movement of the spindle relative to the frame under the action of the rotational driving of the tool-carrying spindle.

15. The device as claimed in claim 13 or 14, the vibration system comprising a rolling arrangement which comprises rolling members (64; 261) which rotate on an undulating rolling surface with an axial undulation component in order to periodically urge the tool in terms of movement.

16. The device as claimed in claim 15, the rolling arrangement comprising a smooth ring and an undulating ring, between which the rolling members (64) rotate, one of the rings, in particular the smooth ring (7), being fixed relative to a frame (1) whilst the other ring, in particular the undulating ring (6), may or may not be able to be moved relative to the frame, the device comprising a connection member (62) which is capable of assuming two positions, a coupling position in which it fixedly joins the undulating ring (6) which may or may not be movable to a drive pinion (2) in terms of rotation, and the other position in which it decouples the ring and the drive pinion (2), this connection member preferably being an abutment ball (62) which, when it is blocked in a coupling position against the drive pinion (2) and the undulating ring (6), via a cam (9), causes the two to rotate together by means of a wedging effect and, when the cam (9) does not block the connection member (2), it allows the undulating ring (6) to remain free to move, the cam (9) preferably being able to be moved axially along the axis (X) of the spindle and moved at the end of a predefined path of the spindle in order to deactivate the vibration system, the spindle preferably comprising a stop (4) which moves the cam (9) by acting on it directly or indirectly, a resilient return member (10) being provided in order to return the cam (9) to the initial position for blocking the connection member when the spindle is raised.

17. The device as claimed in claim 15, the rolling arrangement comprising a smooth ring and an undulating ring, between which the rolling members (64) rotate, one of the rings, in particular the smooth ring, being either free to move relative to a frame (1) and driven in terms of rotation with a drive pinion (2), or fixed relative to the frame, whilst the other ring, in particular the undulating ring (6), rotates with the drive pinion (2), a mechanism being provided in order to move or not to move this ring (7) away from an abutment surface which is fixed relative to the frame so that, in the remote position, the ring (7) is free to move and, in the abutment position, it is fixed relative to the frame (1), the mechanism preferably comprising a series of rolling members such as balls (84) and a cam (9) which radially displaces those rolling members (84) to a greater or lesser extent against two inclined surfaces (88, 89) which generate an axial pushing force for moving away the ring (7) and the abutment surface, the cam being displaced axially, directly or indirectly, by a stop (4) which is fixedly joined to the spindle, a resilient return member preferably being provided in order to return the cam (9) to the initial position thereof when the spindle is raised, this resilient return member being interposed between the drive pinion (2) and the cam (9).

18. The device as claimed in claim 14 or 15, comprising a sheath (201) and a guide (203) which rotates inside the sheath and which is connected by means of a sliding connection to a shaft (204) which carries the tool (208), the vibration system (206) being interposed axially between the sheath and the guide and transmitting axial oscillations to the guide and to the tool when the guide rotates, the vibration system preferably comprising two rings, in particular a smooth ring and an undulating ring, which are moved at a rotation speed relative to each other, one of the rings, in particular the smooth ring (262), being completely connected to the sheath and the other ring, in particular the undulating ring (260), being in rotation with the guide and urged axially into abutment against rolling members (261) which extend between the two rings by means of a resilient damping member (207) whose strength is sufficiently great that, during the axial machining operation, as long as the sheath is not blocked against the component (M) to be machined, the vibration system may transmit axial oscillations to the shaft which carries the tool, the sheath being free to move axially but being immobilized in terms of rotation, the device (200) being arranged so that, at the end of a specific forward movement, the sheath is blocked axially against the component to be machined, the guide (203) being able to continue to move forward, the axial oscillations not being transmitted to the tool and being absorbed by the resilient damping member (207).
